# EUROPEAN PATENT SPECIFICATION

(11) **EP 1 256 434 B1**
(45) Date of publication and mention of the grant of the patent: **10.05.2006**
(21) Application number: 01630001.4
(22) Date of filing: 11.05.2001
(51) Int. Cl.: B29C 47/06, B29C 47/14, B29C 47/58

(54) **A co-extrusion die and method**
Koextrudierdüse und Verfahren
Filière de co-extrusion et procédé

(43) Date of publication of application: 13.11.2002
(73) Proprietor: American Technology Transfer L.L.C., Cheyenne, WY 82001 (US)
(72) Inventor: Gilliomee, Andries, North Meed, 1511 Benoni (ZA); Stein, Burt, North Meed, 1511 Benoni (ZA)
(74) Representative: Lampe, Sigmar

(56) References cited:
- EP-A- 0 655 311
- WO-A-97/19995
- DE-A- 2 345 049
- DE-A- 2 425 655
- GB-A- 1 599 991
- US-A- 3 933 964
- US-A- 5 089 308

## Description

### FIELD OF THE INVENTION

This invention relates to a co-extrusion die and a method of co-extrusion.

### BACKGROUND OF THE INVENTION

The invention relates to a co-extrusion process for at least two thermoplastic materials having different physical characteristics. The two materials are passed through a die in which one material is inseparably coupled to the other material.

The present invention provides a new type of co-extrusion die for forming plastic material composites.

DE 2425655 discloses an extruder die according to the preamble of claim 1. DE 2425655 teaches to extrude a rod of a first material through a first slot and to apply a second material on the periphery of the rod along an arc through a second slot. The flow path of the material through the second "slot" comprises a manifold 35, also extending through an arc, and "orifice means 38" extending from the manifold 35 to bores 31 and 36; when a double external layer is requested, two manifolds and two orifices are provided. The manifold 35 and the slot 38 are lying in two different planes that are not co-planar. Therefore, the flow path of second material does not lie in a plane, and it is not normal to the plane of the main flow path defined by the first slot.

EP-A-0655311 refers to a process of extruding, in a single extrusion station, composites having layers that are thermally distinct. The obtained composite is a film used for coating a substrate (e.g. paperboard) and in fact one of the objects of this application is "*to minimize extruded composite thickness"* (col.3, lines 40-41).

According to this document, the different flow channels of different materials are thermally insulated by a thermal barrier and are provided with thermal detection elements and temperature affecting means. All flows of different materials (e.g. first and second materials) are "transversely spread" together (e.g. in manifold 114 of fig. 4 or manifold 214 of fig. 5 or manifold 314 of fig.6) before being extruded together. The flow channels define flow paths that are not formed in a plane but that are made of several portions formed in different planes. WO97/19995 discloses a coextrusion process of ISOPLAST ® rigid thermoplastic polyurethane with a polycarbonate. There is no disclosure of the construction of the co-extrusion die, that is shown as a box.

### STATEMENTS OF INVENTION

According to the present invention there is provided a co-extrusion die comprising a first die slot extending in a first plane with an inlet for receiving a stream of material from a first extruder and an outlet for producing extrudate from the die, and a second die slot for receiving a stream of material from a second extruder and having an opening into the first die slot between its inlet and outlet, and whose cross-sectional area is less than 5% of the equivalent area of the first die slot, characterized according to claim 1.

Preferably, the second die slot has a first portion of constant depth and which increases continuously in width from its inlet to a maximum which is less than the width of the first slot, and a second portion which opens into the first die slot and which has a substantially smaller constant depth and has a substantially constant width approximately equal to said maximum.

Preferably said second portion has a depth which is less than 10% of the depth of said first portion, and preferably less than 7.5% and more preferably about 7%.

Preferably the minimum cross-sectional area of the second die slot transverse to the stream is less than 3% of the minimum equivalent cross-sectional area of the first die slot, more preferably about 2%.

The second die slot is substantially normal to the first die slot.

Also according to the invention there is provided a co-extrusion die comprising a first die slot extending in a first plane with an inlet for receiving a stream of material from a first extruder and an outlet for producing extrudate from the die, and a second die slot for receiving a stream of material from a second extruder and having an opening into the first die slot between its inlet and outlet, the second die slot being in a plane normal to the first die slot and having a first portion which increases continuously in width from its inlet to a maximum width which is less than the width of the first slot, and a second narrower portion of substantially constant width approximately equal to said maximum with an opening into the first die slot which extends transversely thereto.

The invention also provides for an extrusion apparatus which includes co-extrusion dies according to the present invention.

Yet another aspect of the invention provides a method of producing a polymeric laminate in which two polymeric materials are extruded through a co-extrusion die having two die slots, a first die slot extending in a first plane with an inlet for receiving a stream of one material from a first extruder and an outlet for producing extrudate from the die, and a second die slot defining a secondary flow path for receiving a stream of the second material from a second extruder and having an opening into the first die slot between its inlet and outlet, and whose sectional area is less than 5% of the equivalent characterized according to claim 8.

Yet a further aspect of the present invention provides a method of producing a polymeric laminate in which two polymeric materials are extruded through a co-extrusion die having two die slots, a first die slot extending in a first plane with an inlet for receiving a stream of one material from a first extruder and an outlet for producing extrudate from the die, and a second die slot for receiving a stream of the second material from a second extruder and having an opening into the first die slot between its inlet and outlet, the second material being forced through a first portion of the second die slot which increases continuously in width from its inlet to a maximum width which is less than the width of the first slot, and then through a second narrower portion which opens into the first die slot and which has a substantially constant width approximately equal to said maximum.

The die and the method of the present invention provide a polymeric laminate comprising at least two layers of thermoplastic polymer materials, wherein a first and a second adjacent layer are directly bonded to each other and are made of non-compatible first and second materials having first and second melting points, the difference between the values of said first and second melting points being at least 5°. The difference between the values of said first and second melting points may preferably be at least 10°.

The laminate material obtained by the die and the method of the invention is a laminate having two or more layers, co-extruded according to the above disclosed method; the laminate is calendered to the desired thickness and is substantially self-supporting, i.e. it is different from co-extruded films and similar known products. Generally, the laminate consists of a first layer of a rigid material with the required mechanical properties and of a second layer of a covering material (e.g. a soft material) that has the required "touch" and/or aesthetic aspect. The laminate is used for such applications as building components, automotive parts and transport vehicles in general, wall and pipe protections and starting panels for thermoforming a variety of products such as suitcases, bath tubs, sinks and shower bases.

The method according to the invention results in the possibility of directly bonding by co-extrusion a first and a second layer consisting of materials that are non-compatible. "Non-compatible" materials are understood to mean materials that form layers which would normally delaminate once they have become bonded by traditional co-extrusion techniques. Such non-compatible materials are for example polycarbonates and thermoplastic polyurethanes (TPU).

Non-compatible materials as herein defined must at the same time not be detrimental to each other because of their chemical formulation. An example of such a detrimental coupling not comprised in the present invention is the coupling obtained by co-extruding plastified polyethylene or PVC with polycarbonate: the resulting laminate material will eventually break because of the presence of the phthalate plastifier.

The laminate material obtained by means of the method according to the invention thus comprises two adjacent layers of non-compatible materials that are bonded together directly, i.e. without any mechanical or chemical fixing device; the materials of two adjacent layers have different melting points (measured according to DSC (Digital Scanning Calorimetry) or temperature of the melt flow) and the difference between the values of the melting points of the two adjacent layers is at least 5°C, preferably at least 20°C and more preferably at least 30°C, but it can be as high as 100-110°C or more. Similarly, the two adjacent materials have different softening points: the difference between the values of the softening points (measured according to the norms ISO 306, DIN 53460 or A/50 test method) of the first and second layer materials is at least 10°C, preferably at least 20°C and most preferably at least 30°C.

As above mentioned, the method according to the invention results in the possibility of co-extruding not only compatible materials but also and in particular non-compatible materials.

### DESCRIPTION OF THE DRAWINGS

The invention will be described by way of example only and with reference to the accompanying drawings in which:

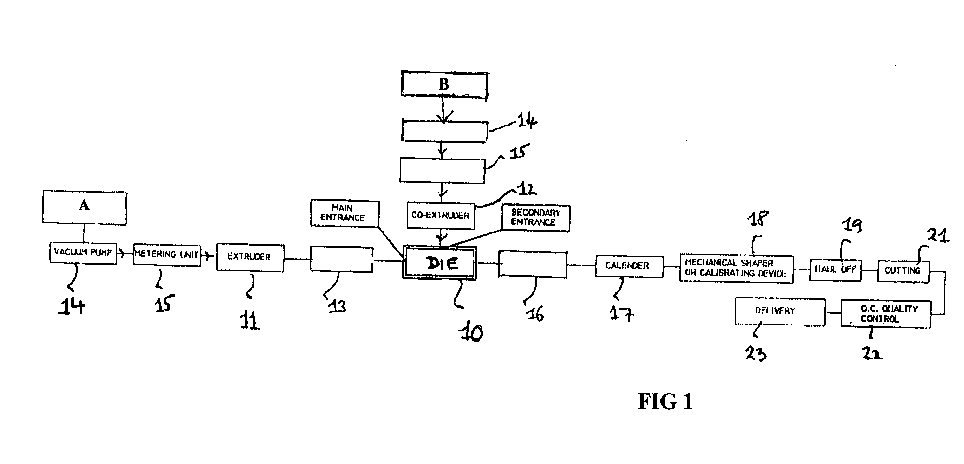

Fig. 1 is a flow diagram for a process utilising a co-extrusion die according to the present invention,

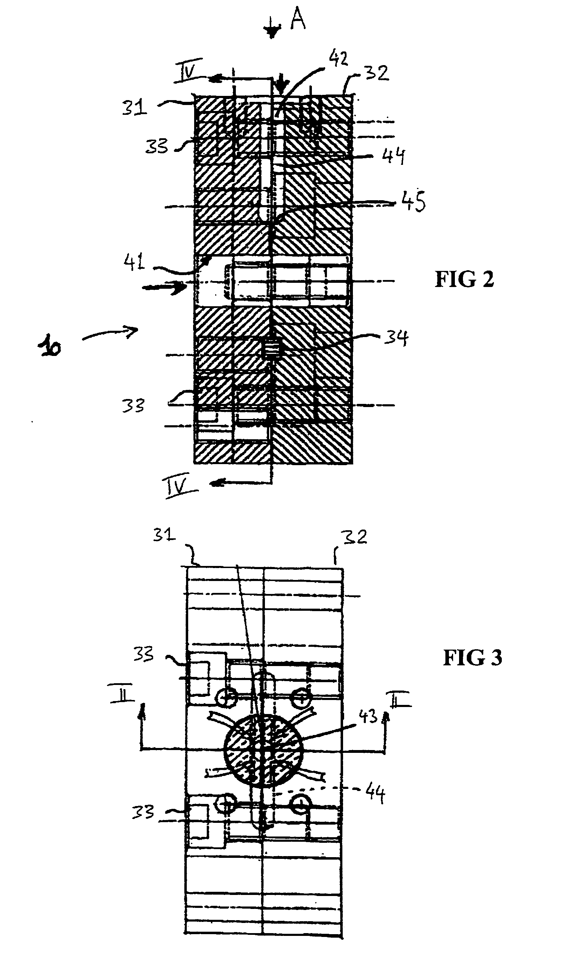

Fig. 2 is a section through a co-extrusion die according to the present invention and is taken on the line II-II of Fig.3,
Fig. 3 is a plan view of the co-extrusion die shown in Fig.2 and viewed in the direction of arrow A,

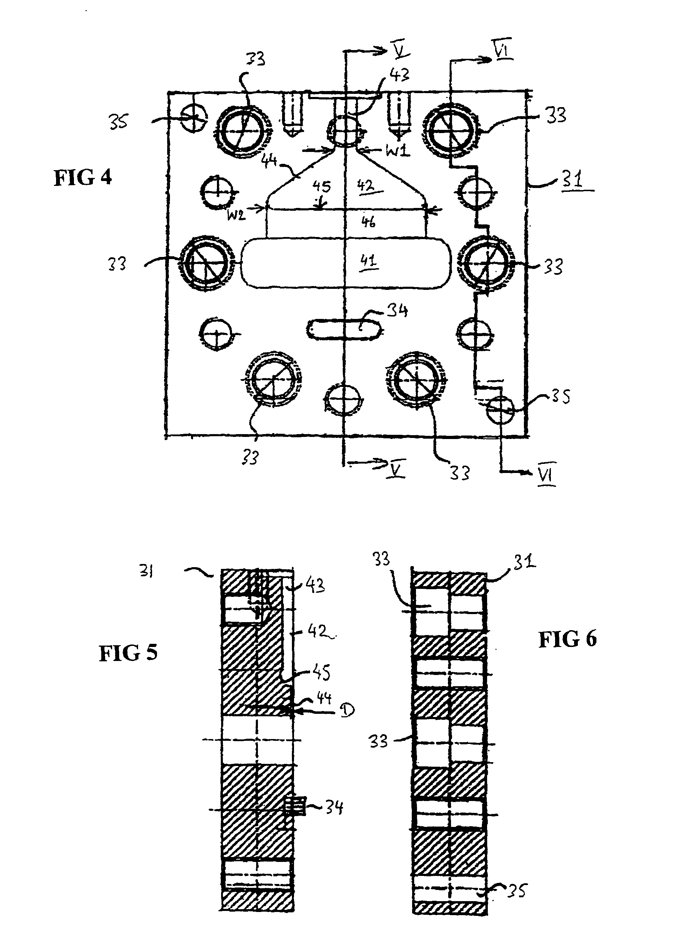

Fig. 4 is a sectional view taken on the line IV-IV of Fig.2,
Fig. 5 is a section on the line V-V of Fig. 4, and
Fig. 6 is a section on the line VI-VI of Fig. 4.

### DETAILED DESCRIPTION OF THE INVENTION

With reference to Fig.1, a process for the manufacture of a polymeric laminate utilises a co-extrusion die 10 according to the present invention. The die 10 receives a first polymeric material A from a first extruder 11 and a second polymeric material B from a second extruder (or co-extruder) 12.

The polymeric material A in pellet, powder, or flake form is delivered to the first extruder 11 by means of a vacuum pump 14 and metering unit 15 and subsequently through a flange 13 to the main entrance of co-extrusion die 10. The polymeric material B in similar form is delivered to the second extruder 12 by similar means.

The material A is a material which is more rigid than material B, that is it has a higher flexural modulus. The material A may be selected from a group comprising acrylonitrilebutadienestyrene (ABS), polyvinylchloride (PVC), polycarbonate, thermoplastic polyurethane, polyolefins such as polyethylene and polypropylene, polyamides, and will be hereinafter be referred to as "Rigid Material". The material B may be selected from a group comprising thermoplastic elastomers, PVC, thermoplastic polyurethanes, polyethylene, polypropylene, ethylene vinyl acetate (EVA), and will hereinafter be referred to as "Soft Material".

In some cases the Rigid and Soft materials may be different grades of the same polymer.

Preferred combinations of materials to be formed into a laminate sheet are:
polycarbonate-TPU (thermoplastic polyurethane)-PPMA-TPU
ABS-TPU and ABS-PVC
styrene polymers-PVC and styrene polymers-TPU
blends-TPU, PA-TPU

Conventionally, blends are commercially available polymer mixtures containing e.g. polycarbonate-ABS-styrene polymers; ABS-PVC-styrene polymers; ABS-PVC.

The two materials are laminated together in the co-extrusion die 10 and are passed through a flange and a slot die or slit die 16. Thereafter the materials may be passed through a calender 17 to obtain precise thicknesses for calendered sheet. If the material is to be embossed or shaped the flat sheet may pass through another shaping device or calibrating device 18. The extrudate is removed by haul off rollers or conveyor 19 before cutting at station 21 and subsequent inspection and packaging at quality control station 22 and delivery station 23, respectively.

Now with reference to Figs 2 to 6, the co-extrusion die 10 is formed from two halves 31 & 32 which are bolted together to form the die. One half 31 is secured to the first extruder 11 and the extrudate exits the other half 32 in the direction of the calender 17. The two halves are secured together by six bolts or set screws 33 and are located relative to each other by a key 34 and location pins in holes 35.

The coaxial die 10 has a first die slot 41 which forms the main flow path axially through the die. The first slot 41 has a constant cross-section and material A from the first extruder 11 is forced through the slot in half-melt condition. The first die slot is about 120mm X 30mm in cross-section.

A second die slot 42 is formed in the die in a plane substantially normal to the first die slot 41 and forms a secondary flow path into the co-extrusion die. The second extruder 12 feeds material B under pressure and in a half-melt condition into the second die slot.

The second die slot 42 is formed in the mating faces between the halves 31 & 32 and has a cylindrical inlet 43 (about 12mm diameter) which opens into a fan-shaped first portion 44 which then extends into a thin rectangular second portion 46 opening into the first die slot 41. The fan-shaped portion 44 increases continuously in width W from a width W1 (12mm) at the inlet 43 to a maximum W2 (about 90mm) at its base 45. The base width W2 is less than the width of the first die slot 41. The second die slot 42 connects into the first die slot 41 through the second portion 46 which extends from base 45 and opens into the wall of the first die slot. The second portion 46 extends transversely of the direction of flow through the first die slot and is narrow with a substantially constant width which is substantially equal to the width W2 of the base 45.

The first portion 44 has a constant depth substantially equal to the diameter of the inlet 43 and the second portion 46 is considerably thinner or narrower having a depth D which is less than 10%, and preferably between 6-7% of the depth of the first portion, in this case about 0.8mm. The first die slot has a cross-sectional area transverse to the direction of flow which is substantially larger than the equivalent area of the second portion 46 which opens into the first die slot 41. The second portion 46 has a cross-sectional area which is less than 5%, and preferably about 2%, of the area of the area of the first die slot 41.

The second portion 46 opens into the first die slot 41 at a location approximately midway along its axial length.

The soft material B where it enters the first die slot 41 forms a thin layer of said soft material on the more rigid material A. The relative thickness of the thin layer is controlled by the processing conditions. The total thickness of the final material comprises in preference about 70% of material A and about 30% of material B.

The invention is further illustrated by the following examples which demonstrate the advantages of the present invention.

### EXAMPLE 1 (COMPARATIVE EXAMPLE)

A laminate sheet comprising a polycarbonate support layer (LEXAN by Dow Chemicals, melting point 270°C, softening point 146°C) and a TPU (thermoplastic polyurethane) cover layer (ESTANE by BF Goodrich, melting point 165°C, softening point 75°C) is co-extruded in a standard extrusion machine by simply coupling and laminating by heating.

The resulting sheet delaminates when subjected to tearing or chemical agents.

### EXAMPLE 2

A laminate sheet comprising the first and second materials of Example 1 is co-extruded according to the method of the invention.

The resulting sheet has improved mechanical properties, a scratch-resistant surface and does not show any delamination after application of chemical agents or mechanical tearing.

### EXAMPLE 3

A laminate sheet comprising an ABS support layer (ABC by Dow Chemicals, melting point 220°C, softening point 116°C) and a PVC cover layer (manufactured by FINPROJECT, melting point 150°C, softening point 70°C) is co-extruded according to the method of the invention.

The resulting sheet also presents improved mechanical characteristics, a scratch-resistant surface and does not show any delamination after application of chemical agents or mechanical tearing.

## Claims

1. A co-extrusion die (10) comprising:
a first die slot (41) defining a main flow path extending in a first plane with an inlet for receiving a stream of material from a first extruder (11) and an outlet for producing extruded material from the die,
a second die slot (42) defining a secondary flow path for receiving a stream of material from a second extruder (12) and having an outlet portion (46) opening into the first die slot (41) between said inlet and said outlet of said first slot (41), said second slot outlet portion (46) having a cross-sectional area that is less than 5% of the equivalent area of the first die slot (41),
**characterized in that** said secondary flow path of said second slot (42) is formed in a plane normal to said first plane of said first die slot (41) and extends transversely to the direction of said main flow path.

2. A die as claimed in Claim 1 wherein the second die slot (42) has a first portion (44) which increases continuously in width from its inlet to a maximum width which is less than the width of the first slot (41), and a second portion (46) which opens into the first die slot (41) and which has a substantially constant width approximately equal to said maximum.

3. A die as claimed in Claim 2 wherein the first portion (44) has a constant depth and the second portion (46) also has a substantially constant depth which is smaller that the depth of the first portion (44).

4. A die as claimed in Claim 2 wherein said second portion (46) has a depth which is less than 10% of the depth of said first portion (44).

5. A die as claimed in any one of Claims 1 to 4 wherein said second die slot opening portion (46) has a cross-sectional area that is about 2% of the area of the corresponding area of the first die slot (41).

6. A co-extrusion die according to claim 1, wherein said second die slot (42) has a first portion (44) which increases continuously in width from its inlet to a maximum width which is less than the width of the first slot (41), and a second narrower portion (46) of substantially constant width and which opens into the first die slot (41) through a narrow opening which extends substantially transversely to the first die slot (41).

7. An extrusion apparatus including a co-extrusion die (10) as claimed in any one of claims 1 to 6.

8. A method of producing a polymeric laminate in which two polymeric materials are extruded through a co-extrusion die (10) having two die slots, a first die slot (41) defining a main flow path extending in a first plane with an inlet for receiving a stream of one material from a first extruder (11) and an outlet for producing extruded material from the die (10), and a second die slot (42) defining a secondary flow path for receiving a stream of a second material from a second extruder (12) and having an outlet portion (46) opening into said first die slot (41) between its inlet and outlet,
**characterized in that** said second material is fed to said main flow path along a secondary flow path that is defined by said second slot (42) and that is formed in a plane substantially normal to said first plane of said first slot, the second material being forced through said opening portion (46) which extends transversely to the direction of flow of the stream and whose cross-sectional area is less than 5% of the equivalent area of the first die slot, to be layered onto the adjacent surface of the first material.

9. A method of producing a polymeric laminate according to claim 8, wherein the second material is forced through a first portion (44) of the second die slot (42) which increases continuously in width from its inlet to a maximum width which is less than the width of the first slot (41), and then through a second narrower portion (46) which opens into the first die slot (41) and which has a substantially constant width approximately equal to said maximum

## Patentansprüche

1. Koextrudierdüse (10), die folgendes umfaßt:
einen ersten Düsenschlitz (41), der eine Hauptströmungsbahn definiert, die sich in einer ersten Ebene erstreckt, mit einem Einlaß zum Aufnehmen eines Materialstroms von einem ersten Extruder (11) und einem Auslaß zum Erzeugen von extrudiertem Material aus der Düse,
einen zweiten Düsenschlitz (42), der eine Nebenströmungsbahn zum Aufnehmen eines Materialstroms von einem zweiten Extruder (12) definiert, und der einen Auslaßabschnitt (46) hat, der sich zwischen dem Einlaß und dem Auslaß des ersten Schlitzes (41) in den ersten Düsenschlitz (41) öffnet, wobei der Auslaßabschnitt (46) des zweiten Schlitzes eine Querschnittsfläche hat, die weniger als 5 % der Äquivalenzfläche des ersten Düsenschlitzes (41) beträgt,
**dadurch gekennzeichnet, daß** die Nebenströmungsbahn des zweiten Schlitzes (42) in einer Ebene senkrecht zu der ersten Ebene des ersten Düsenschlitzes (41) geformt ist und sich quer zur Richtung der Hauptströmungsbahn erstreckt.

2. Düse nach Anspruch 1, wobei der zweite Düsenschlitz (42) einen ersten Abschnitt (44), der von dessen Einlaß bis zu einer Höchstbreite, die geringer ist als die Breite des ersten Schlitzes (41), kontinuierlich in der Breite zunimmt, und einen zweiten Abschnitt (46) hat, der sich in den ersten Düsenschlitz (41) öffnet und der eine im Wesentlichen gleichbleibende Breite hat, die annähernd dem Höchstwert gleich ist.

3. Düse nach Anspruch 2, wobei der erste Abschnitt (44) eine gleichbleibende Tiefe hat und der zweite Abschnitt (46) ebenfalls eine gleichbleibende Tiefe hat, die kleiner ist als die Tiefe des ersten Abschnitts (44).

4. Düse nach Anspruch 2, wobei der zweite Abschnitt (46) eine Tiefe hat, die weniger als 10 % der Tiefe des ersten Abschnitts (44) beträgt.

5. Düse nach einem der Ansprüche 1 bis 4, wobei der Öffnungsabschnitt (46) des zweiten Düsenschlitzes eine Querschnittsfläche hat, die etwa 2 % der Fläche der entsprechenden Fläche des ersten Düsenschlitzes (41) beträgt.

6. Koextrudierdüse nach Anspruch 1, wobei der zweite Düsenschlitz (42) einen ersten Abschnitt (44), der von dessen Einlaß bis zu einer Höchstbreite, die geringer ist als die Breite des ersten Schlitzes (41), kontinuierlich in der Breite zunimmt, und einen zweiten, schmaleren, Abschnitt (46) hat, der sich durch eine schmale Öffnung, die sich im Wesentlichen quer zu dem ersten Düsenschlitz (41) erstreckt, in den ersten Düsenschlitz (41) öffnet.

7. Extrudiervorrichtung, die eine Koextrudierdüse (10) nach einem der Ansprüche 1 bis 6 einschließt.

8. Verfahren zum Erzeugen eines Polymerlaminats, bei dem zwei Polymermaterialien durch eine Koextrudierdüse (10) extrudiert werden, die zwei Düsenschlitze hat, einen ersten Düsenschlitz (41), der eine Hauptströmungsbahn definiert, die sich in einer ersten Ebene erstreckt, mit einem Einlaß zum Aufnehmen eines Stroms eines Materials von einem ersten Extruder (11) und einem Auslaß zum Erzeugen von extrudiertem Material aus der Düse, und einen zweiten Düsenschlitz (42), der eine Nebenströmungsbahn zum Aufnehmen eines Stroms eines zweiten Materials von einem zweiten Extruder (12) definiert, und der einen Auslaßabschnitt (46) hat, der sich zwischen dessen Einlaß und dessen Auslaß in den ersten Düsenschlitz (41) öffnet,
**dadurch gekennzeichnet, daß** das zweite Material der Hauptströmungsbahn längs einer Nebenströmungsbahn zugeführt wird, die durch den zweiten Schlitz (42) definiert wird und die in einer Ebene, im Wesentlichen senkrecht zu der ersten Ebene des ersten Schlitzes, geformt ist, wobei das zweite Material durch den Öffnungsabschnitt (46) gedrückt wird, der sich quer zu der Fließrichtung des Stroms erstreckt und dessen Querschnittsfläche weniger als 5 % der Äquivalenzfläche des ersten Düsenschlitzes beträgt, um auf die angrenzende Oberfläche des ersten Materials geschichtet zu werden.

9. Verfahren zum Erzeugen eines Polymerlaminats nach Anspruch 8, wobei das zweite Material durch einen ersten Abschnitt (44) des zweiten Düsenschlitzes (42), der von seinem Einlaß bis zu einer Höchstbreite, die geringer ist als die Breite des ersten Schlitzes (41), kontinuierlich in der Breite zunimmt, und danach durch einen zweiten, schmaleren, Abschnitt (46) gedrückt wird, der sich in den ersten Düsenschlitz (41) öffnet und der eine im Wesentlichen gleichbleibende Breite hat, die annähernd dem Höchstwert gleich ist.

## Revendications

1. Filière de coextrusion (10), comprenant :
une première fente de filière (41) définissant une trajectoire d'écoulement principale s'étendant dans un premier plan, avec une entrée pour recevoir un courant de matériau provenant d'une première extrudeuse (11) et une sortie pour produire du matériau extrudé à partir de la filière ;
une deuxième fente de filière (42) définissant une trajectoire d'écoulement secondaire pour recevoir un courant de matériau provenant d'une deuxième extrudeuse (12) et comportant une partie de sortie (46) ouverte vers la première fente de filière (41) entre ladite entrée et ladite sortie de ladite première fente (41), ladite partie de sortie de la deuxième fente (46) ayant une surface de section transversale représentant moins de 5% de la surface équivalente de la première fente de filière (41) ;
**caractérisée en ce que** ladite deuxième trajectoire d'écoulement de ladite deuxième fente (42) est formée dans un plan perpendiculaire audit premier plan de ladite première fente de filière (41) et s'étend transversalement à la direction de ladite trajectoire d'écoulement principale.

2. Filière selon la revendication 1, dans laquelle la deuxième fente de filière (42) comporte une première partie ayant une largeur à accroissement continu à partir de son entrée, vers une largeur maximale inférieure à la largeur de la première fente (41) et une deuxième partie (46) ouverte vers la première fente de filière (51) et ayant une largeur essentiellement constante à peu près égale à ladite largeur maximale.

3. Filière selon la revendication 2, dans laquelle la première partie (44) a une profondeur constante, la deuxième partie (46) ayant aussi une profondeur essentiellement constante, inférieure à la profondeur de la première partie.

4. Filière selon la revendication 2, dans laquelle ladite deuxième partie (46) a une profondeur représentant moins de 10% de la profondeur de ladite première partie (44).

5. Filière selon l'une quelconque des revendications 1 à 4, dans laquelle ladite partie d'ouverture de la deuxième fente de filière (46) a une surface de section transversale représentant environ 2% de la surface correspondante de la première fente de filière (41).

6. Filière de coextrusion selon la revendication 1, dans laquelle ladite deuxième fente de filière (42) comporte une première partie (44) ayant une largeur à accroissement continu à partir de son entrée vers une largeur maximale, inférieure à la largeur de la première fente (41) et une deuxième partie plus étroite (46) à largeur essentiellement constante et ouverte vers la première fente de filière (41) à travers une ouverture étroite s'étendant de manière essentiellement transversale à la première fente de filière (41).

7. Dispositif d'extrusion englobant une filière de coextrusion (10) selon l'une quelconque des revendications 1 à 6.

8. Procédé de production d'un stratifié polymère, dans lequel deux matériaux polymères sont extrudés à travers une filière de coextrusion (10) comportant deux fentes de filière, une première fente de filière (41) définissant une trajectoire d'écoulement principale dans un premier plan, avec une entrée pour recevoir un courant d'un matériau provenant d'une première extrudeuse (11) et une sortie pour produire un matériau extrudé à partir de la filière (10), et une deuxième fente de filière (42), définissant une trajectoire d'écoulement secondaire pour recevoir un courant d'un deuxième matériau provenant d'une deuxième extrudeuse (2) et comportant une ouverture de partie de sortie (46) dans ladite première fente de filière (41), entre son entrée et sa sortie ;
**caractérisé en ce que** ledit deuxième matériau est amené vers ladite trajectoire d'écoulement principale le long d'une trajectoire d'écoulement secondaire définie par ladite deuxième fente (42) et formée dans un plan essentiellement perpendiculaire audit premier plan de ladite première fente, le deuxième matériau étant poussé à travers ladite partie d'ouverture (46) s'étendant transversalement à la direction de l'écoulement du courant et dont la surface de section transversale représente moins de 5% de la surface équivalente de la première fente de filière, en vue d'un dépôt sur la surface adjacente du premier matériau.

9. Procédé de production d'un stratifié polymère selon la revendication 8, dans lequel le deuxième matériau est poussé à travers une première partie (44) de la deuxième fente de filière (42) ayant une largeur à accroissement continu à partir de son entrée, vers une largeur maximale inférieure à la largeur de la première fente (41), et ensuite à travers une deuxième partie plus étroite (46) ouverte vers la première fente de filière (41) et ayant une largeur essentiellement constante à peu près égale à ladite largeur maximale.
